# DEMANDE DE BREVET EUROPEEN

(11) **EP 4 624 133 A1**
(43) Date de publication de la demande: **01.10.2025**
(21) Numéro de dépôt: 25164064.5
(22) Date de dépôt: 17.03.2025
(51) Int. Cl.: B29C 49/64, B29C 35/08, B29C 49/78

(54) **PROCÉDÉ DE CHAUFFAGE RÉGULÉ D'UNE SUCCESSION DE PRÉFORMES**

(30) Priorité: 28.03.2024 FR 2403176
(71) Demandeur: Sidel Participations, 76930 Octeville-sur-Mer (FR)
(72) Inventeur: DERRIEN, Mikael, 76930 OCTEVILLE-SUR-MER (FR); LETESTU, Mickaël, 76930 OCTEVILLE-SUR-MER (FR)
(74) Mandataire: Sidel Group

(57) **Abrégé**

Le procédé de chauffage d'une succession de préformes (2) comprend les étapes suivantes :
- chauffer un corps (16) d'une première préforme (2) au moyen de deux éléments de chauffage (10) chauffant chacun une zone chauffée (24) du corps (16),
- déterminer une température de chauffage cible pour chaque zone chauffée (24) en fonction du récipient (1) à produire,
- mesurer la température d'une des zones chauffées (24) du corps (16) à l'issue de l'étape de chauffage,
- modifier la puissance de chauffage de l'élément de chauffage (10) correspondant à ladite zone chauffée (24) du corps (16) si la température mesurée de ladite zone chauffée (24) est différente de la température de chauffage cible,
- chauffer le corps (16) des autres préformes (2) de la succession de préforme avec la puissance de chauffage modifiée.

## Description

La présente invention concerne un procédé de chauffage d'une succession de préformes pour la production de récipients par déformation desdites préformes chauffées.

Il est connu de chauffer les préformes dans une installation de production de récipients afin de rendre ces préformes malléables et permettre leur déformation ultérieure par exemple par étirage soufflage de sorte à réaliser des récipients à partir des préformes chauffées.

Pour ce faire, une succession de préformes est par exemple mise en circulation dans une unité de traitement thermique, ou four, dans laquelle les préformes défilent devant des éléments de chauffage. Les éléments de chauffage sont notamment répartis selon la hauteur du corps des préformes, c'est-à-dire sensiblement parallèlement à l'axe de préforme selon lequel s'étend le corps des préformes, afin de permettre de chauffer à des températures maitrisées plusieurs zones du corps des préformes réparties sur la hauteur des préformes. En effet, ces zones doivent pouvoir être chauffées à des températures différentes afin de maitriser au mieux la déformation de ces zones lors de la réalisation d'un récipient en fonction de la forme souhaitée pour ce récipient. Ainsi, plus la température d'une zone est élevée, plus cette zone peut être déformée lors de la réalisation du récipient. Les puissances de chauffage des différents éléments de chauffage permettent ainsi d'appliquer un profil de températures à une préforme, ce profil dépendant des caractéristiques du récipient à réaliser à partir de cette préforme et de la matière de la préforme.

Afin d'assurer un chauffage correct des préformes, il est connu de mettre en place une boucle de régulation, dans laquelle le réglage de la puissance de chauffage des éléments de chauffage est asservie à la température de préformes chauffées mesurée en une zone de la préforme à l'issue du chauffage des préformes. La répartition de la chaleur dans la préforme est déterminée en fonction de la mesure d'une température de référence mesurée en une zone de la préforme et la puissance de chauffage des éléments de chauffage est ajustée en fonction de cette température de référence pour approcher le profil de températures à appliquer aux préformes.

Une telle boucle de régulation ne donne cependant pas entière satisfaction. En effet, notamment pour des zones de la préforme éloignées de la zone dans laquelle la température de référence a été mesurée, le réglage de la puissance de chauffage reste fondé sur cette température de référence, ce qui rend le réglage approximatif.

L'un des buts de l'invention est de pallier ces inconvénients en proposant un procédé de chauffage d'une succession de préformes, dans lequel la puissance de chauffage des éléments de chauffage peut être ajustée de façon précise afin d'appliquer un profil de températures correspondant précisément au profil souhaité aux préformes au cours de leur chauffage.

A cet effet, l'invention concerne un procédé de chauffage d'une succession de préformes pour la production de récipients par déformation desdites préformes chauffées, chaque préforme comprenant un corps s'étendant selon un axe de préforme, ledit procédé de chauffage comprenant les étapes suivantes :
- chauffer le corps d'une première préforme de la succession de préformes au moyen d'au moins deux éléments de chauffage, chaque élément de chauffage chauffant une zone chauffée différente du corps de la première préforme selon l'axe de préforme,
- déterminer au moins une température de chauffage cible pour chaque zone chauffée du corps de chaque préforme en fonction du récipient à produire par déformation de chaque zone chauffée de la préforme,
- mesurer la température d'au moins une des zones chauffées du corps de la première préforme à l'issue de l'étape de chauffage,
- modifier la puissance de chauffage de l'élément de chauffage correspondant à ladite zone chauffée du corps si la température mesurée de ladite zone chauffée est différente de la température de chauffage cible, ladite puissance de chauffage étant modifiée pour que la température de la zone chauffée correspondante de la préforme soit sensiblement égale à la température de chauffage cible,
- chauffer le corps des autres préformes de la succession de préforme avec la puissance de chauffage modifiée.

Dans le procédé de chauffage selon l'invention, la puissance de chauffage de chaque élément de chauffage est donc réglée en fonction de la température mesurée dans la zone du corps de la préforme correspondante que cet élément de chauffage est agencé pour chauffer. En d'autres termes, la puissance de chauffage d'un élément de chauffage est réglée sur la base d'une mesure réelle de la température dans la zone chauffée du corps de la préforme qui est chauffée par cet élément de chauffage et non sur une température de référence mesurée dans une zone différente du corps de la préforme chauffée. La boucle de régulation ainsi établie permet donc de régler de façon précise la puissance de chauffage des éléments de chauffage.

Le procédé de chauffage selon l'invention peut en outre comprendre une ou plusieurs des caractéristiques suivantes, prises isolément ou selon toute combinaison techniquement envisageable :
- la température est mesurée pour chaque zone chauffée du corps de la première préforme, la puissance de chauffage de chaque élément de chauffage correspondant à chaque zone chauffée étant modifiée en fonction de la température mesurée de chaque zone chauffée et de la température de chauffage cible de chaque zone chauffée ;
- le corps de chaque préforme comprend au moins trois zones chauffées par au moins trois éléments de chauffage, au moins deux zones chauffées adjacentes selon l'axe de préforme desdites zones chauffées étant regroupées pour former au moins une zone chauffée étendue, les puissances de chauffage des éléments de chauffage correspondant à ladite zone chauffée étendue étant modifiées ensemble en fonction de la température mesurée d'une des zones chauffées de ladite zone chauffée étendue et d'une température de chauffage cible de ladite zone chauffée étendue ;
- la puissance de chauffage des éléments de chauffage correspondant à ladite zone chauffée étendue est différente de la puissance de chauffage de l'élément de chauffage correspondant à la zone chauffée en dehors de la zone chauffée étendue ;
- la température de chauffage cible d'une zone chauffée est comprise entre une température de chauffage acceptable basse et une température de chauffage acceptable haute, la puissance de chauffage de l'élément de chauffage correspondant à ladite zone chauffée étant modifiée pour que la température de ladite zone chauffée soit comprise entre ladite température de chauffage acceptable basse et ladite température de chauffage acceptable haute à l'issue de l'étape de chauffage ;
- l'écart entre la température de chauffage acceptable basse et la température de chauffage cible et l'écart entre la température de chauffage cible et la température de chauffage acceptable haute sont égaux ou différents ;
- chaque zone chauffée du corps d'une préforme est chauffée par une pluralité d'éléments de chauffage adjacents selon une direction de défilement sensiblement perpendiculaire à l'axe de préforme, ladite préforme étant déplacée selon ladite direction de défilement en regard de ladite pluralité d'éléments de chauffage au cours de l'étape de chauffage, la puissance de chauffage de l'ensemble desdits éléments de chauffage adjacents étant modifiée pour que la température de la zone chauffée correspondante soit sensiblement égale à la température de chauffage cible à l'issue de l'étape de chauffage;
- chaque élément de chauffage comprend une pluralité de sources de rayonnement électromagnétique monochromatique ou pseudo-monochromatique ;
- la température d'au moins une des zones chauffées est mesurée par au moins une caméra thermique ;
- chaque zone chauffée s'étend sur une hauteur, mesurée selon l'axe de préforme, comprise entre 4 mm et 5 mm ;
- le procédé de chauffage comprend en outre une étape de mesure de l'épaisseur de la paroi d'une zone déformée dans un récipient réalisé à partir d'une préforme de la succession de préformes, ladite zone déformée correspondant à au moins une zone chauffée de la préforme à partir de laquelle le récipient est réalisé, la puissance de chauffage de l'élément de chauffage correspondant à ladite zone chauffée étant modifiée si l'épaisseur mesurée est différente d'une épaisseur cible pour ladite zone déformée.

L'invention apparaîtra plus clairement à la lecture de la description qui va suivre, donnée uniquement à titre d'exemple non limitatif, et faite en référence aux dessins dans lesquels :
[Fig. 1] - la Fig. 1 est une représentation schématique de dessus d'une installation de production de production de récipients permettant de mettre en œuvre le procédé de chauffage selon l'invention,
[Fig. 2] - la Fig. 2 est une représentation schématique en coupe d'une préforme chauffée par des éléments de chauffage,
[Fig. 3] - la Fig. 3 est une représentation schématique d'une interface de mise en œuvre du procédé de chauffage selon l'invention, et
[Fig. 4] - la Fig. 4 est une représentation schématique d'une partie d'un récipient réalisé à partir d'une préforme chauffée selon un procédé de chauffage de l'invention pour la mise en œuvre d'une étape optionnelle supplémentaire du procédé de chauffage.

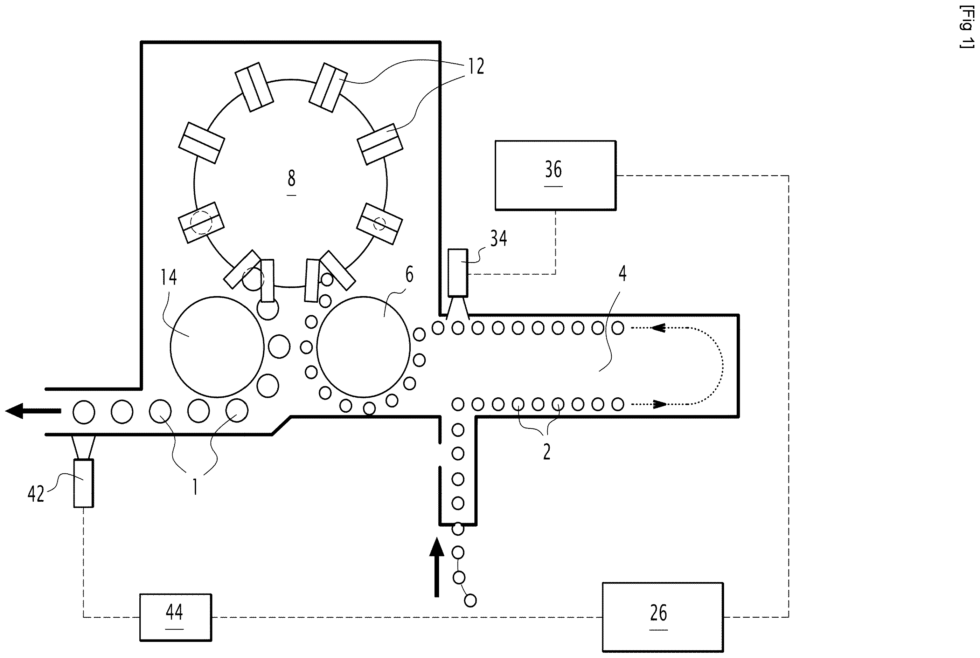

En référence à la Fig. 1, on décrit une installation de production de récipients **1** à partir d'une succession de préformes **2.** Une telle installation comprend, de façon connue et dans l'ordre de circulation des préformes 2 et des récipients 1 dans l'installation, une unité de traitement themique **4,** ou four, une roue de transfert **6** et une station de formage **8.**

L'unité de traitement thermique 4 est agencée pour chauffer une succession de préformes 2 transportées dans l'unité de traitement thermique 4 par un système de préhension et de déplacement des préformes 2 de sorte à les faire défiler devant des éléments de chauffage **10,** comme cela sera décrit plus en détail ultérieurement. Il est cependant entendu que l'invention s'applique également à une unité de traitement thermique 4 permettant de chauffer chaque préforme 2 individuellement sans déplacer celle-ci dans l'unité de traitement thermique 4.

En sortie de l'unité de traitement thermique 4, la roue de transfert 6 est agencée pour récupérer les préformes 2 chauffées et pour les transférer dans la station de formage 8.

La station de formage 8 est par exemple formée par un caroussel portant plusieurs moules **12** formant des cavités de moulage présentant la forme des récipients 1 à réaliser. Les préformes 2 chauffées sont chacune placées dans un moule et déformées pour acquérir la forme d'un récipient 1 par exemple par étirage soufflage. En sortie de la station de formage, les récipients 1 formés sont récupérés par exemple au moyen d'une autre roue de transfert **14,** par exemple pour être acheminés vers d'autres stations de l'installation, telles qu'une station d'étiquetage, une station de remplissage et une station de mise en place d'un bouchon sur les récipients.

Comme indiqué précédemment, une telle installation est connue et ne sera pas décrite plus en détail ici. Il est cependant entendu que l'agencement de l'installation représentée sur la Fig. 1 n'est donné qu'à titre d'exemple et que l'invention s'applique à tout type d'agencement d'installation dès lors que celle-ci comprend une unité de traitement thermique 4.

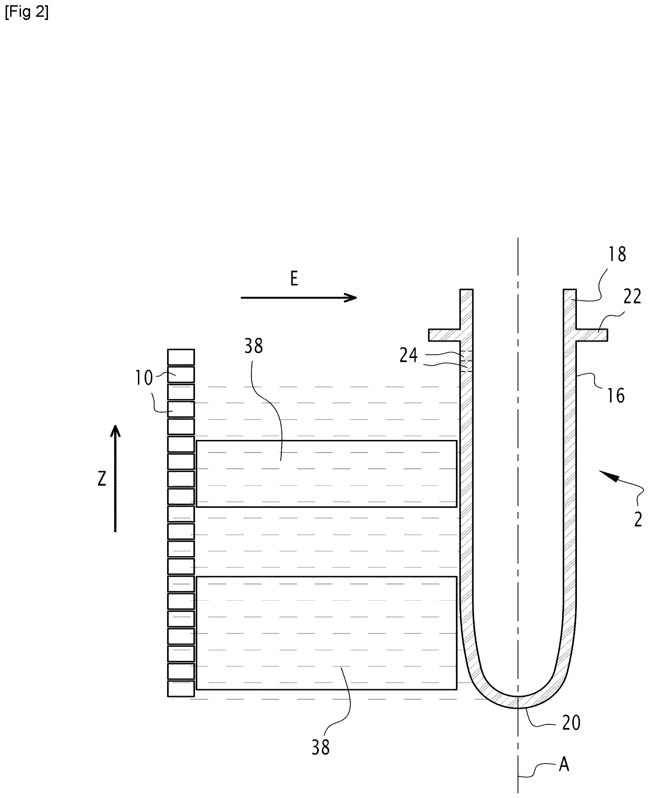

Comme plus particulièrement représenté sur la Fig. 2, chaque préforme 2 comprend un corps **16** et un col **18** et l'unité de traitement thermique 4 est agencée pour chauffer le corps 16 sans chauffer le col 18 de chaque préforme 2, comme cela sera décrit plus en détail ultérieurement. Le corps 16 s'étend selon un axe de préforme **A** et présente par exemple la forme d'un tube à essai s'étendant entre un fond **20** et le col 18, qui forme une extrémité ouverte du tube à essai. Le col 18 comprend par exemple une collerette **22** s'étendant d'un plan radial sensiblement perpendiculaire à l'axe de préforme A en saillie vers l'extérieur du corps 16. Une telle collerette 22 forme par exemple une surface de préhension de la préforme 2 et du récipient 1 réalisé à partir de la préforme 2. La partie de la préforme 2 s'étendant à partir de la collerette **22** jusqu'à l'extrémité ouverte comprend par exemple un filetage permettant de fixer un bouchon sur le récipient 1 réalisé à partir de la préforme 2. Ainsi, le col 18 de la préforme 2 présente la même forme que le col du récipient 1 réalisé à partir de cette préforme 2. C'est pourquoi, il convient de ne pas chauffer le col 18 de la préforme 2 dans l'unité de traitement thermique 4 afin d'éviter toute déformation du col 18.

L'unité de traitement thermique 4 est agencée pour chauffer le corps 16 de chaque préforme 2 afin d'augmenter la température du corps 16 au-dessus de la température de transition vitreuse du matériau formant le corps 16 de sorte que le corps 16 acquiert un caractère malléable permettant sa déformation pour former un récipient 1.

A cet effet et comme représenté sur la Fig .2, la pluralité de préformes 2 est agencée pour circuler en regard d'au moins deux éléments de chauffage 10 agencés pour émettre un rayonnement thermique vers le corps des préformes 2 passant en regard. Plus particulièrement, les éléments de chauffage 10 sont disposés l'un au-dessus de l'autre selon une direction d'élévation Z de l'unité de traitement thermique 4, sensiblement parallèle à l'axe de préforme A lorsqu'une préforme 2 est placée dans l'unité de traitement thermique 4. Ainsi, les éléments de chauffage 10 sont disposés de sorte à exposer l'ensemble du corps 16 des préformes 2 au rayonnement, plus particulièrement du fond 20 à la collerette 22 des préformes 2. Chaque élément de chauffage 10 est plus particulièrement agencé pour chauffer une zone, dite zone chauffée **24,** du corps 16 d'une préforme 2, la zone chauffée 24 s'étendant sur une partie de la hauteur du corps de la préforme 2, mesurée selon l'axe de préforme A. En d'autres termes, le corps 16 de chaque préforme 2 comprend au moins deux zones chauffées 24 disposées l'une au-dessus de l'autre selon l'axe de préforme A, chaque zone chauffée 24 s'étendant en regard d'un élément de chauffage 10 correspondant de sorte à être exposée à la chaleur émise par cet élément de chauffage 10 correspondant lorsque la préforme 2 circule dans l'unité de traitement thermique 4.

Chaque élément de chauffage 10 comprend par exemple une pluralité de sources de rayonnement électromagnétique monochromatique ou pseudo-monochromatique. Plus particulièrement, chaque élément de chauffage 10 est par exemple un émetteur laser et les sources de rayonnement sont des puces laser agencées pour émettre un rayonnement laser dans le domaine de l'infrarouge selon une direction d'émission E sensiblement perpendiculaire à la direction d'élévation Z et correspondant à la direction séparant les éléments de chauffage 10 du corps 16 des préformes 2 circulant dans l'unité de traitement thermique 4. Les sources de rayonnement sont par exemple agencées les unes à côté des autres sur un support de sorte à former au moins une rangée de sources de rayonnement s'étendant selon la direction longitudinale. Selon un mode de réalisation, les sources de rayonnement forment au moins une rangée supérieure et au moins une rangée inférieure disposées l'une au-dessus de l'autre selon la direction d'élévation.

De tels éléments de chauffage sont par exemple décrits dans le document FR 3 124 030 et l'homme du métier pourra se référer à ce document pour obtenir plus de détail, notamment en ce qui concerne la structure de chaque source de rayonnement, l'agencement des sources de rayonnement sur un support, la connexion des sources de rayonnement entre elles et le refroidissement des éléments de chauffage. Il est entendu que l'invention n'est pas limitée à des éléments de chauffage formés par des émetteurs laser et s'applique également à d'autres types d'élément de chauffage, tels que des lampes tubulaires à incandescence de type halogène.

Il convient cependant de noter que l'invention est particulièrement adaptée à des émetteurs laser car de tels émetteurs laser émettent un rayonnement très peu dispersif, c'est-à-dire principalement orienté selon la direction d'émission E, à la différence d'éléments de chauffage halogène qui présentent un cône d'émission du rayonnement particulièrement grand. Ainsi, les émetteurs laser permettent de chauffer une zone chauffée 24 très localisée du corps 16 de la préforme 2, tandis qu'un élément de chauffage halogène chauffera une zone plus étendue et le rayonnement émis par cet élément de chauffage et/ou la réflexion de ce rayonnement dans l'unité de traitement thermique 4 risquent d'interférer avec le rayonnement émis par un autre élément de chauffage et ainsi chauffer une zone chauffée autre que celle pour laquelle il est prévu, ce qui réduit l'efficacité du procédé de chauffage qui va être décrit ultérieurement.

Avec de tels émetteurs laser, chaque zone chauffée 24 présente par exemple une hauteur sensiblement comprise entre 4 mm et 5 mm, par exemple sensiblement égale à 4.7 mm. Selon un mode de réalisation, une préforme 2 présente entre dix-huit et trente-six zones chauffées 24, l'unité de traitement thermique 4 comprenant au moins autant d'éléments de chauffage 10 agencés en une colonne s'étendant selon la direction d'élévation Z, chaque élément de chauffage 10 de la colonne étant agencé pour chauffer une des zones chauffées 24 correspondantes en fonction de la hauteur du corps 16 des préformes 2.

Selon un mode de réalisation, l'unité de traitement thermique comprend plusieurs colonnes d'éléments de chauffage 10 disposés les unes à côtés des autres selon la direction de circulation des préformes 2 dans l'unité de traitement thermique 4 de sorte que les préformes défilent devant une succession d'éléments de chauffage 10 lorsqu'elles circulent dans l'unité de traitement thermique 4. En d'autres termes, une zone chauffée 24 du corps 16 d'une préforme 2 est chauffée par une pluralité d'éléments de chauffage 10 s'étendant à une même hauteur selon la direction d'élévation Z alors que la préforme 2 circule dans l'unité de traitement thermique 4. Selon un mode de réalisation, la préforme 2 est en outre entraînée en rotation sur elle-même autour de son axe de préforme A pendant qu'elle circule dans l'unité de traitement thermique 4 de sorte que toute la circonférence du corps 16 est exposée au rayonnement des éléments de chauffage 10. Ainsi, chaque zone chauffée 24 s'étend sur toute la circonférence d'une portion du corps 16 de chaque préforme 2. Cependant, comme cela sera décrit ultérieurement, dans le cas d'une déformation asymétrique du corps 16 de la préforme 2 dans une zone chauffée 24, la température de cette zone chauffée 24 n'est pas uniforme sur toute la circonférence de la préforme.

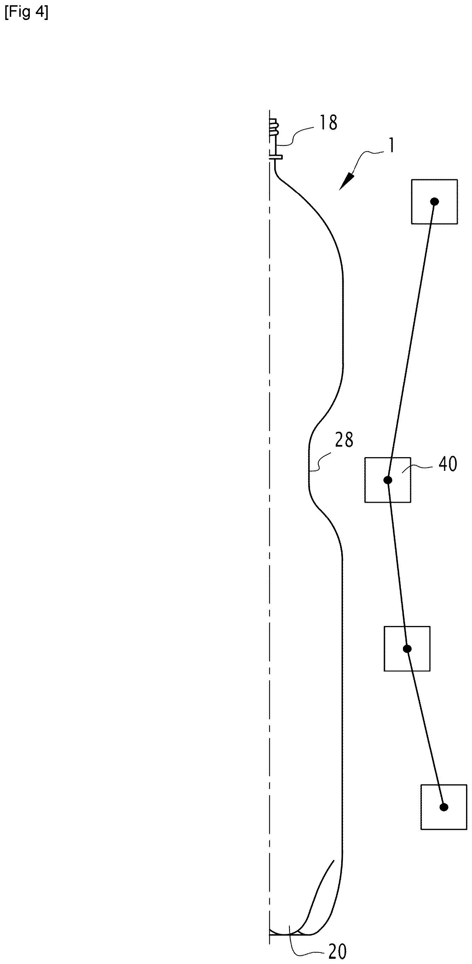

La puissance de chauffage de chaque élément de chauffage 10 est ajustable au moyen d'un dispositif de commande **26** de l'unité de traitement thermique 4. Le dispositif de commande 26 permet ainsi d'ajuster l'intensité du chauffage de chaque zone chauffée de la préforme 2 afin de gérer le profil de température qui lui est appliqué. En effet, de façon connue, les zones chauffées 24 d'une même préforme 2 ne sont pas nécessairement chauffées à une température uniforme. La température d'une zone chauffée 24 dépend notamment de la forme du récipient 1 à produire à partir de la préforme 2. Plus particulièrement, plus une zone donnée d'une préforme 2 doit être déformée, ou étirée, pour former le récipient 1, plus la température à laquelle elle doit être chauffée est haute. Ainsi, en se référant à l'exemple de forme de récipient 1 représentée sur la Fig. 4, les zones du corps 16 s'étendant au voisinage du col 18 et les zones du corps s'étendant au voisinage du fond 20 doivent être chauffées à une température plus grande que celle nécessaire pour les zones s'étendant au niveau de l'étranglement **28** s'étendant sensiblement à mi-hauteur du récipient 1.

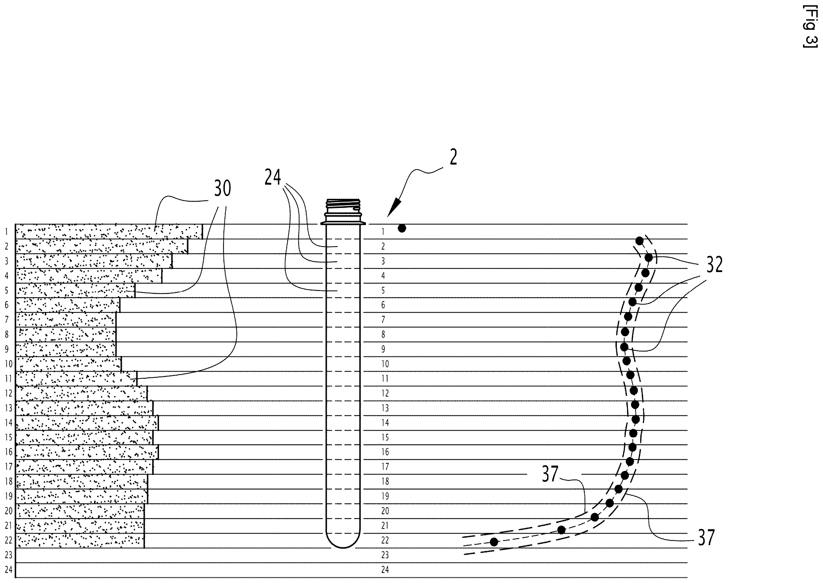

Comme représenté sur la Fig. 3, le dispositif de commande 26 permet ainsi d'ajuster la puissance de chauffage d'un élément de chauffage 10 particulier, comme représenté par l'histogramme à gauche sur la Fig.3, en fonction de la température à laquelle doit être chauffer la zone chauffée 24 correspondant à cet élément de chauffage particulier 10, comme représenté sur le graphique de droite de la Fig.3. Sur cette figure montrant un exemple d'un affichage du réglage appliqué par le dispositif de commande 26 aux éléments de chauffage, les éléments de chauffage 10 sont au nombre de vingt-quatre, numérotés de 1 à 24, et des barres **30** de l'histogramme représentent chacune la puissance de chauffage d'un de ces éléments de chauffage 10 en fonction de la zone chauffée 24 de la préforme 2 en regard de ces éléments de chauffage 10. Sur la Fig. 3, le corps de la préforme 2 comprend vingt-deux zones chauffées 24. Sur le graphique de droite, chaque point **32** représente la température souhaitée, dite température de chauffage cible, pour la zone chauffée 24 correspondante. En observant cette figure, on constate ainsi que plus la température de chauffage cible d'une zone chauffée 24 est élevée, plus la puissance de chauffage de l'élément de chauffage 10 correspondant est importante. Sur l'exemple de la Fig. 3, on constate par exemple que la puissance de chauffage des éléments de chauffage 6 à 10 est sensiblement inférieure à la puissance de chauffage des autres éléments de chauffage, ce qui permet de réaliser l'étranglement 28 du récipient 1 représenté sur la Fig. 4.

Lorsque l'unité de traitement thermique 4 comprend plusieurs colonnes d'éléments de chauffage 10, la puissance de chauffage des éléments de chauffage 10 d'une même ligne, c'est-à-dire les éléments de chauffage 10 s'étendant à la hauteur selon la direction d'élévation Z, est constante. Ainsi, lorsque le dispositif de commande 26 commande la puissance de chauffage d'un élément de chauffage 10 particulier, cette puissance de chauffage est appliquée à tous les éléments de chauffage 10 situés à la même hauteur que cet élément de chauffage particulier. Cependant, dans le cas où le récipient 1 à former présente au moins une portion dans laquelle la section n'est pas circulaire, la puissance de chauffage des éléments de chauffage 10 situées à la hauteur de cette portion peut être modulée pour permettre une déformation asymétrique de la préforme 2 dans cette portion.

Le procédé de chauffage selon l'invention prévoit de faire défiler les préformes dans l'unité de traitement thermique 4 en regard des éléments de chauffage 10 dont la puissance de chauffage est réglée par le dispositif de commande 26 en fonction de la température de chauffage cible pour les zones chauffées 24 correspondantes.

Le procédé de chauffage comprend en outre une boucle de régulation de la puissance de chauffage de chaque élément de chauffage 10 en fonction de la température réelle de la zone chauffée 24 correspondante.

A cet effet, le procédé de chauffage comprend une étape de mesure de la température d'au moins une zone chauffée 24 d'au moins une première préforme 2 de la succession de préformes 2 après le chauffage de celle-ci. Pour ce faire, l'unité de traitement thermique 4 comprend un dispositif de mesure **34** de la température d'au moins une zone chauffée 24 au voisinage de la sortie de l'unité de traitement thermique 4. De préférence, le dispositif de mesure 34 est agencé pour mesurer la température de chaque zone chauffée 24 d'une préforme 2 ayant été chauffée par les éléments de chauffage 10 correspondants de l'unité de traitement thermique 4. Un tel dispositif de mesure 34 est par exemple formé par une caméra thermique agencée en sortie de l'unité de traitement thermique et acquérant une image, par exemple dans le domaine infrarouge, de chaque préforme 2 chauffée transmise à la roue de transfert 6, comme représenté sur la Fig. 1. En variante, le dispositif de mesure 34 comprend un ou plusieurs pyromètres agencés chacun pour mesurer la température d'une zone chauffée 24 du corps 16 d'au moins la première préforme 2. Les températures sont acquises par un dispositif de traitement **36** du dispositif de mesure 34 et sont transmises au dispositif de commande 26.

Le dispositif de commande 26 compare la température mesurée pour au moins une zone chauffée 24 à la température de chauffage cible pour cette zone chauffée. Si la température mesurée est sensiblement égale à la température de chauffage cible, le dispositif de commande 26 ne modifie pas la puissance de chauffage de l'élément de chauffage 10 correspondant à cette zone chauffée. Si la température mesurée est différente de la température de chauffage cible, le dispositif de commande 26 modifie la puissance de chauffage de l'élément de chauffage 10 correspondant afin que la zone chauffée 24 soit chauffée à la température cible souhaitée. Il convient de noter que par « sensiblement égal » et par « différent », on entend que la température mesurée est située ou non dans une plage acceptable autour de la température de chauffage cible, comme représenté par les deux courbes **37** en pointillés représentées autour des points 32 sur le graphique de droite de la Fig. 3. En d'autres termes, la température de chauffage cible est située entre une température de chauffage acceptable basse, inférieure à la température de chauffage cible, et une température de chauffage acceptable haute, supérieure à la température de chauffage cible. Si la température mesurée est comprise entre ces deux températures de chauffage acceptables, alors le dispositif de commande 26 considère que la température mesurée est sensiblement égale à la température de chauffage cible et ne modifie pas la puissance de chauffage de l'élément de chauffage 10 correspondant. Inversement, si la température mesurée est inférieure à la température de chauffage acceptable basse, le dispositif de commande 26 considère que la température mesurée est différente de la température de chauffage cible et augmente la puissance de chauffage de l'élément de chauffage 10 correspondant. Si la température mesurée est supérieure à la température de chauffage acceptable haute, le dispositif de commande 26 considère que la température mesurée est différente de la température de chauffage cible et réduit la puissance de chauffage de l'élément de chauffage 10 correspondant. Selon un mode de réalisation, les températures de chauffage acceptables correspondent à plus ou moins 2% de la température de chauffage cible. Il convient de noter que les deux courbes 37 de températures de chauffage acceptables ne sont pas nécessairement symétriques l'une de l'autre par rapport aux températures de chauffage cibles. En d'autres termes, l'écart entre la température de chauffage acceptable basse et la température de chauffage cible et l'écart entre la température de chauffage cible et la température de chauffage acceptable haute peuvent être différents l'un de l'autre.

La régulation permet ainsi d'ajuster la puissance de chauffage d'un élément de chauffage 10 particulier (ou d'une ligne d'éléments de chauffage 10 s'élevant à la même hauteur) en fonction de la température mesurée pour la zone chauffée 24 par cet élément de chauffage 10 et non en fonction d'une température de référence mesurée dans une autre zone chauffée de la préforme. Ainsi, la régulation est fortement améliorée et plus précise.

De préférence, la régulation décrite ci-dessus est appliquée à toutes les zones chauffées 24 du corps 16 de la première préforme 2 de sorte à régler tous les éléments de chauffage 10 correspondants, comme représenté sur la Fig. 3. Ainsi, chaque élément de chauffage 10 peut être réglé en fonction de la température mesurée pour la zone chauffée 24 correspondante, ce qui rend ce réglage particulièrement précis.

Egalement de préférence, les étapes décrites ci-dessus sont appliquées à toutes les préformes 2 de la succession de préformes 2 afin d'appliquer la régulation en continu au fur et à mesure que des préformes 2 sont chauffées dans l'unité de traitement thermique. On assure ainsi que le profil de températures souhaité est appliqué à toutes les préformes 2 et que toute dérive peut être corrigée sans arrêter l'unité de traitement thermique 4.

Selon un mode de réalisation, le procédé peut être optimisé en appliquant un réglage similaire à un ou plusieurs groupes d'éléments de chauffage 10 à partir de la mesure de la température d'une zone chauffée 24 par l'un des éléments de chauffage 10 du ou de chaque groupe d'éléments de chauffage 10. En effet, comme visible sur la Fig. 3, dans certains cas, plusieurs zones chauffées 24 adjacentes doivent être chauffées de façon similaire dans la mesure où ces zones chauffées 24 sont destinées à être déformées pour former une zone particulière du récipient lors de la production d'un récipient 1. Ainsi, sur la Fig. 3, les zones chauffées 24 numérotées de 7 à 9 doivent par exemple être chauffées par une même puissance de chauffage pour former l'étranglement 28 du récipient 1 de la Fig. 4. De même, la puissance de chauffage des éléments de chauffage 10 numérotés de 20 à 22 doit être la même pour former le fond du récipient 1. Une telle étape de regroupement de zones chauffées 24 peut être mise en œuvre dès lors que le corps de la préforme comprend au moins trois zones chauffées 24, dont deux zones adjacentes selon l'axe de la préforme A sont regroupées pour former une zone chauffée étendue 38.

Dans ce cas, le procédé de chauffage comprend le regroupement d'au moins deux zones chauffées 24 adjacentes pour former une zone chauffée étendue **38,** représentée par des rectangles sur la Fig. 2. La régulation peut alors être appliquée pour la ou chaque zone chauffée étendue 38, en même temps que la régulation pour des zones chauffées 24 en dehors d'une zone chauffée étendue, en modifiant ensemble et dans le même sens (augmentation de la puissance de chauffage ou diminution de la puissance de chauffage) les puissances de chauffage des éléments de chauffage 10 correspondant à chaque zone chauffée étendue 38 en fonction de la température mesurée d'une des zones chauffées 24 de la ou chaque zone chauffée étendue 38 et d'une température de chauffage cible de la ou chaque zone chauffée étendue 38.. Il est entendu que la puissance de chauffage des éléments de chauffage 10 correspondant à une zone chauffée étendue 38 peut être différente de la puissance de chauffage 10 des éléments de chauffage correspondant à une zone chauffée 24 en dehors de cette zone de chauffage étendue 38 et/ou correspondant à une autre zone chauffée étendue 38. Par exemple, les zones chauffées 24 d'une zone chauffée étendue 38 sont prévues pour être déformées de façon similaire pour former un récipient 1.

Selon un mode de réalisation, le procédé de chauffage comprend en outre une régulation de la puissance de chauffage des éléments de chauffage 10 en fonction de l'épaisseur de la paroi des récipients 1 produits à partir des préformes 2 chauffées.

A cet effet, le procédé de chauffage comprend une étape de mesure de l'épaisseur de la paroi d'une zone déformée **40** dans un récipient réalisé à partir d'une préforme de la succession de préforme, comme représenté sur la Fig. 4. Cette zone déformée 40 correspond à au moins une zone chauffée 24 d'une préforme 2 à partir de laquelle le récipient 1 est réalisé et il est ainsi possible de faire le lien entre l'épaisseur mesurée et la puissance de chauffage 10 correspondant à la zone chauffée 24 à partir de laquelle la zone déformée 40 est formée. Une comparaison entre l'épaisseur mesurée et une épaisseur cible de la zone déformée permet ainsi au dispositif de commande 26 de modifier la puissance de chauffage de l'élément de chauffage 10 correspondant lorsque l'épaisseur mesurée est différente de l'épaisseur cible, de la même façon que pour la comparaison entre une température mesurée et une température de chauffage cible décrite précédemment.

L'épaisseur est par exemple mesurée par un dispositif de mesure de l'épaisseur **42** placé en sortie de la station de formage 8 ou en aval de l'autre roue de transfert 14, comme représenté sur la Fig. 1. Les épaisseurs sont acquises par un dispositif de traitement **44** du dispositif de mesure d'épaisseur 42 et sont transmises au dispositif de commande 26 pour mettre en place la boucle de régulation. Comme pour la régulation fondée sur des températures mesurées, la régulation fondée sur les épaisseurs mesurées est de préférence réalisée sur toutes les zones déformées 40 correspondant aux zones chauffées 24 et donc aux éléments de chauffage 10. De même, des zones déformées étendues peuvent être formées à partir de zones déformées 40 adjacentes pour réguler la puissance de chauffage de plusieurs éléments de chauffage 10 à partir d'une mesure de l'épaisseur d'une zone déformée 40 d'une zone déformée étendue. Pour des détails de la mise en œuvre de la régulation fondée sur la mesure d'épaisseurs, on pourra se référer à la description faite pour la régulation fondée sur la mesure de températures.

Le dispositif de commande 26, le dispositif de traitement 36 du dispositif de mesure de température 34 et, éventuellement, le dispositif de traitement 44 du dispositif de mesure d'épaisseur 42 sont propre à mettre en œuvre un procédé de chauffage décrit ci-dessus.

Ces dispositifs sont des circuits électroniques conçus pour manipuler et/ou transformer des données représentées par des quantités électroniques ou physiques dans des registres des dispositifs et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, les dispositifs de commande 26 et de traitement 36, 44 sont réalisés sous forme d'un composant logique programmable, tel qu'un FPGA (de l'anglais *Field Programmable Gate Array*)*,* ou encore d'un circuit intégré, tel qu'un ASIC (de l'anglais *Application Specific Integrated Circuit*).

En variante, lorsque le procédé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

## Revendications

1. Procédé de chauffage d'une succession de préformes (2) pour la production de récipients (1) par déformation desdites préformes (2) chauffées, chaque préforme (2) comprenant un corps (16) s'étendant selon un axe de préforme (A), ledit procédé de chauffage comprenant les étapes suivantes :
- chauffer le corps (16) d'une première préforme (2) de la succession de préformes (2) au moyen d'au moins deux éléments de chauffage (10), chaque élément de chauffage (10) chauffant une zone chauffée (24) différente du corps (16) de la première préforme (2) selon l'axe de préforme (A),
- déterminer au moins une température de chauffage cible pour chaque zone chauffée (24) du corps (16) de chaque préforme (2) en fonction du récipient (1) à produire par déformation de chaque zone chauffée (24) de la préforme (2),
- mesurer la température d'au moins une des zones chauffées (24) du corps (16) de la première préforme (2) à l'issue de l'étape de chauffage,
- modifier la puissance de chauffage de l'élément de chauffage (10) correspondant à ladite zone chauffée (24) du corps (16) si la température mesurée de ladite zone chauffée (24) est différente de la température de chauffage cible, ladite puissance de chauffage étant modifiée pour que la température de la zone chauffée (24) correspondante de la préforme (2) soit sensiblement égale à la température de chauffage cible,
- chauffer le corps (16) des autres préformes (2) de la succession de préforme avec la puissance de chauffage modifiée ;
**caractérisé en ce que** le corps (16) de chaque préforme (2) comprend au moins trois zones chauffées (24) par au moins trois éléments de chauffage (10), au moins deux zones chauffées adjacentes selon l'axe de préforme (A) desdites zones chauffées (24) étant regroupées pour former au moins une zone chauffée étendue (38), les puissances de chauffage des éléments de chauffage (10) correspondant à ladite zone chauffée étendue (38) étant modifiées ensemble en fonction de la température mesurée d'une des zones chauffées (24) de ladite zone chauffée étendue (38) et d'une température de chauffage cible de ladite zone chauffée étendue (38).

2. Procédé de chauffage selon la revendication 1, dans lequel la puissance de chauffage des éléments de chauffage (10) correspondant à ladite zone chauffée étendue (38) est différente de la puissance de chauffage de l'élément de chauffage (10) correspondant à la zone chauffée (24) en dehors de la zone chauffée étendue (38).

3. Procédé de chauffage selon l'une quelconque des revendications 1 ou 2, dans lequel la température de chauffage cible d'une zone chauffée (24) est comprise entre une température de chauffage acceptable basse et une température de chauffage acceptable haute, la puissance de chauffage de l'élément de chauffage (10) correspondant à ladite zone chauffée (24) étant modifiée pour que la température de ladite zone chauffée (24) soit comprise entre ladite température de chauffage acceptable basse et ladite température de chauffage acceptable haute à l'issue de l'étape de chauffage.

4. Procédé de chauffage selon la revendication 3, dans lequel l'écart entre la température de chauffage acceptable basse et la température de chauffage cible et l'écart entre la température de chauffage cible et la température de chauffage acceptable haute sont égaux ou différents.

5. Procédé de chauffage selon l'une quelconque des revendications 1 à 4, dans lequel chaque zone chauffée (24) du corps (16) d'une préforme (2) est chauffée par une pluralité d'éléments de chauffage (10) adjacents selon une direction de défilement sensiblement perpendiculaire à l'axe de préforme (A), ladite préforme (2) étant déplacée selon ladite direction de défilement en regard de ladite pluralité d'éléments de chauffage (10) au cours de l'étape de chauffage, la puissance de chauffage de l'ensemble desdits éléments de chauffage (10) adjacents étant modifiée pour que la température de la zone chauffée (24) correspondante soit sensiblement égale à la température de chauffage cible à l'issue de l'étape de chauffage.

6. Procédé de chauffage selon l'une quelconque des revendications 1 à 5, dans lequel chaque élément de chauffage (10) comprend une pluralité de sources de rayonnement électromagnétique monochromatique ou pseudo-monochromatique.

7. Procédé de chauffage selon l'une quelconque des revendications 1 à 6, dans lequel la température d'au moins une des zones chauffées (24) est mesurée par au moins une caméra thermique.

8. Procédé de chauffage selon l'une quelconque des revendications 1 à 7, dans laquelle chaque zone chauffée (24) s'étend sur une hauteur, mesurée selon l'axe de préforme (A), comprise entre 4 mm et 5 mm.

9. Procédé de chauffage selon l'une quelconque des revendications 1 à 8, comprenant en outre une étape de mesure de l'épaisseur de la paroi d'une zone déformée (40) dans un récipient (1) réalisé à partir d'une préforme (2) de la succession de préformes (2), ladite zone déformée (40) correspondant à au moins une zone chauffée (24) de la préforme (2) à partir de laquelle le récipient (1) est réalisé, la puissance de chauffage de l'élément de chauffage (10) correspondant à ladite zone chauffée (24) étant modifiée si l'épaisseur mesurée est différente d'une épaisseur cible pour ladite zone déformée (40).
